# EUROPÄISCHE PATENTSCHRIFT

(11) **EP 1 093 957 B1**
(45) Veröffentlichungstag und Bekanntmachung des Hinweises auf die Patenterteilung: **19.01.2005**
(21) Anmeldenummer: 00119803.5
(22) Anmeldetag: 12.09.2000
(51) Int. Cl.: B60L 3/00, G01R 31/02

(54) **Verfahren zur Erfassung und Überwachung der Berührungsspannung am Chassis von Trolleybussen sowie Einrichtung zur Durchführung des Verfahrens**
Method for detecting and monitoring the trolley-bus chassis-contact voltage and a device for carrying out the method
Méthode de détection et surveillance de la tension de contact d'un chassis d'un trolleybus et dispositif pour mettre en oeuvre ladite méthode

(30) Priorität: 20.10.1999 DE 19950513
(43) Veröffentlichungstag der Anmeldung: 25.04.2001
(73) Patentinhaber: Vossloh Kiepe GmbH, 40599 Düsseldorf (DE)
(72) Erfinder: Winand, Helmut, Dipl.-Ing., 42657 Solingen (DE)
(74) Vertreter: Feder, Wolf-Dietrich, Dr. Dipl.-Phys.

(56) Entgegenhaltungen:
- DE-A- 3 343 590
- FR-A- 2 400 444
- RU-C- 2 099 207
- US-A- 3 987 425
- US-A- 4 947 155

## Beschreibung

Die Erfindung betrifft ein Verfahren zur Erfassung und Überwachung der Berührungsspannung am Chassis von Trolleybussen mit den Merkmalen aus dem Oberbegriff des Patentanspruchs 1 sowie eine Einrichtung zur Durchführung des Verfahrens mit den Merkmalen aus dem Oberbegriff des Patentanspruchs 4.

Da Trolleybusse als Pneufahrzeuge keine sichere Verbindung des Chassis mit der Erde besitzen, muß bei ihnen als Schutz gegen gefährliche Berührungsspannungen die Maßnahme einer Schutzisolation angewandt werden. Dies bedeutet, daß die gesamte elektrische Anlage zweifach oder verstärkt gegenüber dem Chassis isoliert ist. Die Einstiegspartien können eine dritte Isolation als zusätzlichen Schutz aufweisen.

Da ein Trolleybus im Gegensatz zu anderen schutzisolierten Geräten ständig der Witterung, Verschmutzung und Erschütterung ausgesetzt ist, müssen die Widerstände aller Isolationsstrecken periodisch kontrolliert werden.

Um die Sicherheit zu erhöhen, werden Systeme zur Isolationsüberwachung eingesetzt. Anstatt des Isolationswiderstandes kann auch die Berührungsspannung erfaßt werden. Verfahren mit den Merkmalen aus dem Oberbegriff des Patentanspruchs 1 sowie Einrichtungen mit den Merkmalen aus dem Oberbegriff des Patentanspruchs 4 sind grundsätzlich bekannt und in US-A-947 155 beschrieben.

In diesem Dokument ist eine Einrichtung geoffenbart, mittels der der zeitliche Verlauf der gemessenen Berührungsspannung mit einer vorgegebenen Spannungs/Zeit-Kennlinie verglichen wird, die so ausgestaltet ist, daß bei höheren Spannungen ein schnelleres Ansprechen der Erfassung und Überwachung stattfindet als bei niedrigeren Spannungen. Die Einrichtung besitzt eine Spannungsmessvorrichtung, die einerseits mit dem Chassis verbunden und andererseits über eine Ankoppelschaltung an den geerdeten Leiter der Oberleitung anschließbar ist. Die Spannungsmessvorrichtung ist mit einer Vorrichtung zur Erzeugung eines Alarmsignals und/oder zur Auslösung eines Abschaltvorgangs verbunden. Die Einrichtung ist als Analog-Schaltung aufgebaut.

Der Erfindung liegt die Aufgabe zugrunde, ein Verfahren mit den im Oberbegriff des Patentanspruchs 1 angegebenen Merkmalen sowie eine Einrichtung mit den Merkmalen aus dem Oberbegriff des Patentanspruchs 3 so weiterzubilden, daß bei der Erfassung der Meßwerte ein Spannungsabfall an der Oberleitung berücksichtigt wird. Schließlich sollte eine Möglichkeit eröffnet werden, an der erfindungsgemäßen Einrichtung ein Testverfahren ohne Beeinflussung durch parasitäre Widerstände durchzuführen.

Die Lösung der erstgenannten Aufgabe geschieht erfindungsgemäß verfahrensmäßig mit den Merkmalen aus dem kennzeichnenden Teil des Patentanspruchs 1 sowie einrichtungsmäßig mit den Merkmalen aus dem kennzeichnenden Teil des Patentanspruchs 3.

Vorteilhafte Weiterbildungen der Erfindung sind in den abhängigen Ansprüchen beschrieben.

Wie weiter unten anhand von Ausführungsbeispielen beschrieben, geht die Erfindung davon aus, daß in geerdeten Oberleitungsnetzen für Trolleybusse der geerdete Leiter der Oberleitung als Referenzpotential für die Erfassung der Berührungsspannung verwendet werden kann.

Bei einem Verfahren und einer Einrichtung zur Erfassung und Überwachung der Berührungsspannungen am Chassis von Trolleybussen ist es zweckmäßig, das Verfahren und die Einrichtung gegen kurzzeitige Umladevorgänge unempfindlich zu machen, um Fehlalarme zu verhindern. Bei den bekannten Einrichtung wird dies mit den oben beschriebenen Mitteln erreicht.

Dabei können grundsätzlich zwei Gefahrenstufen vorgesehen werden, denen unterschiedliche Spannungs/Zeit-Kennlinien zugeordnet sind, wobei die Spannungs/Zeit-Kennlinie für die niedrigere Gefahrenstufe niedrigere Spannungswerte aufweist.

Bei dem erfindungsgemäßen Verfahren wird die Tatsache berücksichtigt, daß unter realen Meßbedingungen die Oberleitung belastet ist und damit ein Spannungsabfall auftritt, der zu Verfälschungen der Messungen führt. Das erfindungsgemäße Verfahren und die erfindungsgemäße Einrichtung eröffnen die Möglichkeit, hier durch Anwendung einer Kompensationsspannung auch unter realen Meßbedingungen korrekte Werte zu erhalten.

Schließlich hat sich gezeigt, daß bei der Ausführungsform des erfindungsgemäßen Verfahrens und der erfindungsgemäßen Einrichtung, bei der eine Kompensationsspannung verwendet wird, ein besonders gutes Testverfahren zur Überprüfung der Einrichtung durchgeführt werden kann, das unbeeinflußt durch parasitäre Widerstände, beispielsweise über die Reifen des Fahrzeugs, ist.

Im folgenden werden anhand der beigefügten Zeichnungen Ausführungsbeispiele für das erfindungsgemäße Verfahren sowie Einrichtungen zu seiner Durchführung näher erläutert.

In den Zeichnungen zeigen:
Fig. 1 in einem Prinzipschaltbild den grundsätzlichen Aufbau einer Einrichtung zur Erfassung und Überwachung der Berührungsspannung am Chassis eines Trolleybusses;
Fig. 2 eine Ausführungsform einer Spannungsmeßvorrichtung, die zwischen das Chassis und die Ankoppelschaltung, wie in Fig. 1 dargestellt, eingeschaltet ist;
Fig. 3 in einem Schaubild den Spannungsabfall in einem Oberleitungsnetz;
Fig. 4 in einer Darstellung analog Fig. 1 eine Ausführung der Einrichtung nach Fig. 1 mit Kompensation des Spannungsabfalles an der Oberleitung;
Fig. 5 die Schaltung nach Fig. 4 mit Schaltungsergänzungen zur Durchführung eines Testverfahrens.

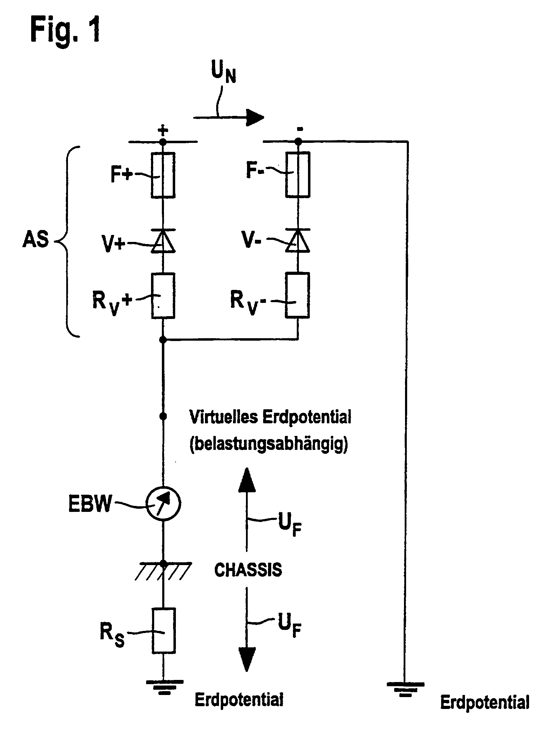

Fig. 1 zeigt den grundsätzlichen Aufbau einer Einrichtung zur Erfassung und Überwachung der Berührungsspannung am Chassis eines Trolleybusses. Eine Spannungsmeßvorrichtung EBW (elektronischer Berührungsspannungs-Wächter) ist einerseits mit dem Chassis und andererseits über eine Ankoppelschaltung AS mit der Oberleitung verbunden, wobei die Ankoppelschaltung AS in an sich bekannter Weise zwei zueinander parallel geschaltete Zweige aufweist, die jeweils einen unmittelbar mit einem der Pole der Oberleitung verbindbaren Hochleistungs-Abschaltautomat F+ und F-aufweisen, dem eine in Richtung auf den jeweiligen Pol durchlässige Diode V+ bzw. V- und ein Vorwiderstand R_{V}+, R_{V}- vorgeschaltet sind.

Zwischen den Polen der Oberleitung liegt die Spannung U_{N}. Das Chassis ist über einen u.a. durch die Reifen des Fahrzeugs gegebenen hohen Widerstand Rₛ mit Erdpotential verbunden, und zwischen Chassis und Erdpotential tritt als Fehlerspannung die Spannung U_{F} auf. Für die Messung dieser Fehlerspannung U_{F} mittels der Spannungsmeßvorrichtung EBW wird, wie aus Fig. 1 abzulesen, als Referenzpotenzial der geerdete Leiter der Oberleitung verwendet, so daß die Messung gegen ein belastungsabhängiges, virtuelles Erdpotential durchgeführt wird.

Die Vorwiderstände R_{V}+, R_{V}- und die Hochleistungs-Abschaltautomaten F+, F- dienen zur sicheren Ankoppelung der Meßschaltung. Da im Fehlerfall positive Spannung am Chassis anliegt, sorgen die beiden Dioden immer für einen Stromfluß zum Minuspol der Oberleitung. Sollte eine Diode V+, V- durchlegieren, so entsteht, wenn sie mit dem Minuspol der Oberleitung verbunden ist, keine Gefährdung. Bei Polaritätswechsel löst dann der Hochleistungs-Abschaltautomat über die Vorwiderstände aus.

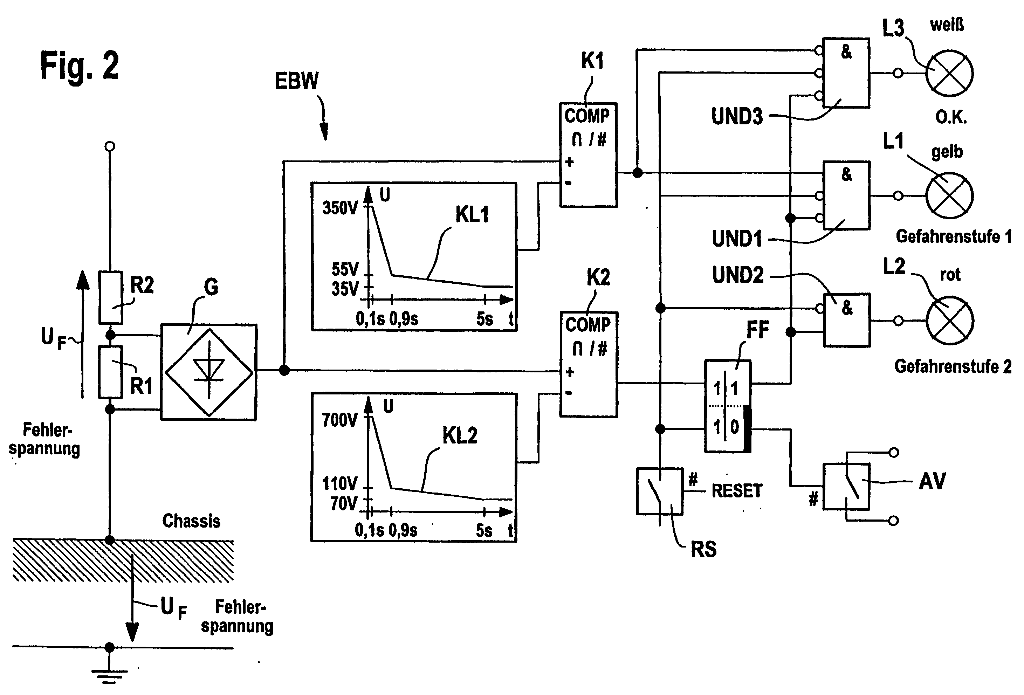

Fig. 2 zeigt in einer detaillierteren Darstellung die Spannungsmeßvorrichtung EBW aus Fig. 1. Die Spannungsmeßvorrichtung EBW, die zur Überwachung der Fehlerspannung U_{F} dient, hat folgenden Aufbau. Zwischen das Chassis und die in Fig. 2 nicht dargestellte Ankoppelschaltung AS ist ein Spannungsteiler R1-R2 eingeschaltet. Die über dem Widerstand R1 abgegriffene Spannung wird zunächst einer Gleichrichterbrücke G zugeführt. Die gleichgerichtete Spannung wird auf zwei Zweigen jeweils einer Komparatoreinheit K1 und einer Komparatoreinheit K2 zugeführt. In diesen Komparatoreinheiten wird der gemessene Spannungswert und seine Anlegezeit mit den Werten jeweils einer vorgegebenen Spannungs/Zeit-Kennlinie KL1 bzw. KL2 verglichen. Wie Fig. 2 zu entnehmen, verläuft jede der beiden Spannungs/Zeit-Kennlinien, die den Komparatoreinheiten durch Einprogrammieren vorgegeben werden, von bei kurzen Zeiten hohen Spannungswerten in abfallender Charakteristik zunächst steil und dann flacher zu niedrigeren Spannungswerten bei längeren Zeiten. Bei der Spannungs/Zeit-Kennlinie KL1 liegt das Spannungsmaximum bei 350 V, während es bei der Spannungs/Zeit-Kennlinie KL2 bei 700 V liegt. Der Verlauf der Kennlinien ist derart, daß die Werte von KL1 zu den entsprechenden Zeitpunkten genau der Hälfte der Werte von KL2 entsprechen.

Die Komparatoreinheiten K1 und K2 geben ein Signal ab, wenn die gemessene Spannung U_{F} oberhalb der jeweiligen Spannungs/Zeit-Kennlinie KL1 oder KL2 liegt.

Der Ausgang der Komparatoreinheit K1 ist mit dem Eingang eines ersten UND-Gliedes UND1 verbunden, während der Ausgang der Komparatoreinheit K2 mit dem Eingang eines zweiten UND-Gliedes UND2 verbunden ist. Weiterhin sind die Ausgänge der Komparatoreinheiten K1 und K2 jeweils mit den negierten Eingängen eines dritten UND-Gliedes UND3 verbunden. Zwischen dem Ausgang der Komparatoreinheit K2 und UND2 ist als Speichereinheit ein bistabiles Kippglied FF eingeschaltet. Eine Rücksetzvorrichtung RS steuert über negierte Eingänge die UND-Glieder UND1, UND2 und UND3 und den Rücksetzeingang des bistabilen Kippgliedes FF an. Ein zweiter, den Grundzustand kennzeichnenden Ausgang des bistabilen Kippgliedes FF ist mit einer Vorrichtung AV zur Auslösung von Abschaltvorgängen verbunden.

An den Ausgang des ersten UND-Gliedes UND1 ist eine Vorrichtung zur Erzeugung eines Alarmsignals, beispielsweise eine gelbleuchtende Lampe L1, angeschlossen, während an den Ausgang des UND-Gliedes UND2 eine entsprechende Vorrichtung als rotleuchtende Lampe L2 angeschlossen ist. An den Ausgang des dritten UND-Gliedes UND3 ist eine den normalen Betriebszustand anzeigende, weißleuchtende Lampe L3 angeschlossen.

Der Ausgang der Komparatoreinheit K2 bzw. des bistabilen Kippgliedes FF ist weiterhin über negierte Eingänge mit UND1 und UND3 verbunden.

Die in Fig. 2 dargestellte Schaltung arbeitet in folgender Weise.

Ein Aufleuchten der weißleuchtenden Lampe L3 signalisiert, daß die Spannungsmeßvorrichtung an Betriebsspannung liegt und keine Berührungsspannung U_{F} erkannt wurde. Die eine Gefahrenstufe 1 anzeigende gelbleuchtende Lampe L1 leuchtet auf, wenn eine Berührungsspannung U_{F} gemessen wurde und der gemessene Wert oberhalb der Spannungs/Zeit-Kennlinie KL1 liegt. In diesem Falle erlischt die weißleuchtende Lampe L3. Liegt der gemessene Wert von U_{F} oberhalb der Spannungs/Zeit-Kennlinie KL2, so leuchtet die rotleuchtende Lampe L2 auf, die eine höhere Gefahrenstufe 2 anzeigt. In diesem Falle erlischt die gelbleuchtende Lampe L1, und dieser Zustand wird im bistabilen Kippglied FF gespeichert. Der Zustand kann über die Rücksetzvorrichtung RS gelöscht werden, wenn die von der Komparatoreinheit K2 kommende Spannung nicht mehr anliegt.

Vom bistabilen Kippglied FF aus kann ggf. über die Vorrichtung AV ein Abschaltvorgang, wie etwa Abschaltung Hauptschütz und/oder Absenkung des Stromabnehmers, erfolgen bzw. rückgängig gemacht werden.

Die anhand der Fig. 1 und 2 geschilderte Einrichtung und das mit ihr ausgeübte Verfahren funktionieren in völlig zufriedenstellender Weise, wenn die Oberleitung unbelastet ist. Ist die Oberleitung belastet, verringert sich die erfaßte Spannung um die Hälfte des Spannungsabfalles, der durch Verbraucher (auch den Trolleybus selbst) auf der Oberleitung erzeugt wird.

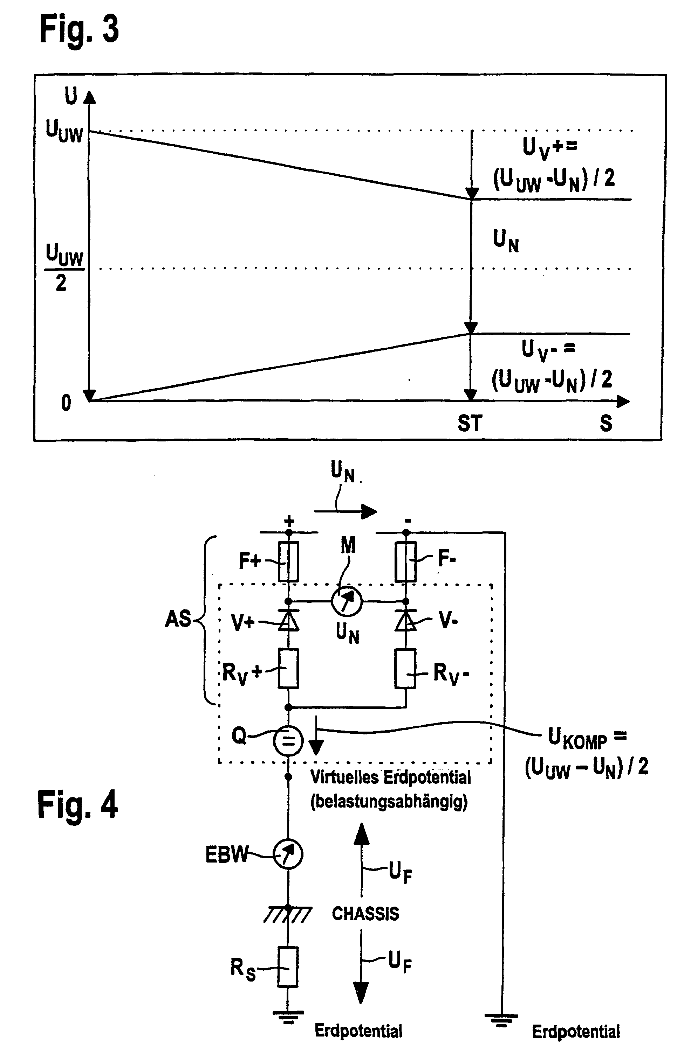

Dies ist in Fig. 3 dargestellt.

Fig. 3 zeigt den Spannungsverlauf U auf der Oberleitung in Abhängigkeit von der jeweiligen Entfernung S vom Unterwerk. Die Entfernung des Trolleybusses vom Unterwerk ist mit ST bezeichnet. Die Leerlaufspannung des Unterwerkes sei U_{UW}. Dann beträgt die vom Trolleybus erfaßte Netzspannung U_{N}. Dies bedeutet, daß der Spannungsabfall jeweils gegeben ist durch U_{V+} = (U_{UW}-U_{N})/2 und U_{V}- = (U_{UW}-U_{N})/2.

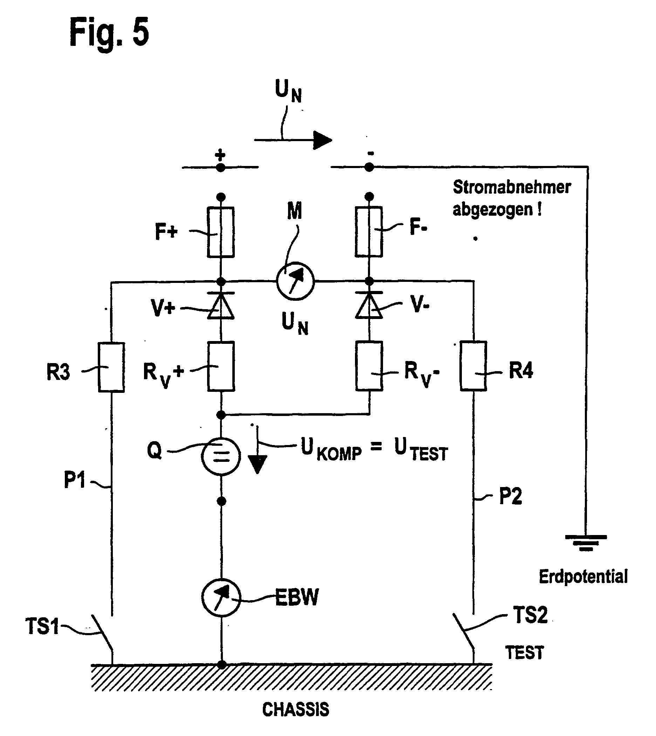

Fig. 4 zeigt, wie dieser Spannungsabfall an der Oberleitung bei der Schaltung nach Fig. 1 berücksichtigt werden kann.

Es wird zwischen dem Meßanschluß der Spannungsmeßvorrichtung EBW und die Ankoppelschaltung AS eine steuerbare Spannungsquelle Q eingeschaltet. Unter der Voraussetzung, daß die Leerlaufspannung U_{UW} der Unterwerke bekannt und konstant ist, kann aus der mittels eines weiteren Meßgerätes M gemessenen Netzspannung und der Leerlaufspannung eine Kompensationsspannung U_{KOMP} = (U_{UW}-U_{N})/2 berechnet werden, die den Spannungsanstieg auf dem Minusleiter der Oberleitung kompensiert.

Die in Fig. 4 dargestellte Ausführungsform einer Einrichtung zur Erfassung und Überwachung der Berührungsspannung eröffnet die Möglichkeit eines Testverfahrens auf die ordnungsgemäße Funktionsfähigkeit der Einrichtung.

Zur Erläuterung dieses Testverfahrens dient Fig. 5.

Die Einrichtung nach Fig. 5 weist im Prinzip die gleiche Schaltung auf wie die Einrichtung nach Fig. 4. Zur Durchführung des Testverfahrens sind die beiden Zweige der Ankoppelschaltung jeweils über einen Prüfzweig P1 bzw. P2 und einen Testschalter TS1 bzw. TS2 mit dem Chassis verbindbar. Dabei enthält der Prüfzweig P1 einen Prüfwiderstand R3 und der Prüfzweig P2 einen Prüfwiderstand R4. Das Testverfahren wird bei abgezogenem Stromabnehmer durchgeführt, um den Einfluß des Übergangswiderstandes Reifen-Fahrbahn zu vermeiden.

Durch Betätigen der Testschalter TS1 bzw. TS2 werden die Prüfwiderstände R3 und R4 auf Chassis gelegt, und die Vorrichtung Q zur Erzeugung der Kompensationsspannung gibt ihre maximale Spannung aus. Die Prüfwiderstände R3 und R4 sind nun so bemessen, daß, wenn beide Testschalter TS1 und TS2 betätigt werden, die Meßvorrichtung nach Fig. 2 anspricht und durch Aufleuchten der roten Lampe L2 Gefahrenstufe 2 anzeigt. Wird nur einer der beiden Testschalter TS1 oder TS2 betätigt, so zeigt die Meßvorrichtung nach Fig. 2 durch Aufleuchten der gelben Lampe Gefahrenstufe 1 an. Wird der Test einer solchen Einrichtung in herkömmlicher Weise ohne eine eigene Spannungserzeugung an der Oberleitung ausgeführt, so hat dies zwei gravierende Nachteile:
a) Der Test ist nicht erfolgreich, obgleich die Einrichtung funktionsfähig ist, und zwar deshalb, weil der Untergrund so gut leitend ist, daß die Prüfwiderstände keine ausreichende Spannung auf dem Chassis erzeugen können.
b) Der Test ist erfolgreich, obwohl die Anlage nicht voll funktionsfähig ist, und zwar deshalb, weil nur die Ankopplung an den Minuspol der Oberleitung überprüft wird, da der Pfad zum Pluspol stromlos bleibt. Eine fehlende Verbindung zum Pluspol wird nicht bemerkt. Bei Wechsel der Polarität ist die Einrichtung dann ohne Funktion.

## Patentansprüche

1. Verfahren zur Erfassung und Überwachung der Berührungsspannung am Chassis von Trolleybussen, die an ein geerdetes Oberleitungsnetz anschließbar sind, bei welchem das Chassis über eine Spannungsmeßvorrichtung mit dem geerdeten Pol der Oberleitung verbunden und die Spannung zwischen Chassis und Erdpotential gemessen wird, und wenn der gemessene Spannungswert einen vorgegebenen Wert überschreitet, ein Alarmsignal und/oder ein Abschaltvongang ausgelöst wird, wobei der gemessene Spannungswert und seine Anlegezeit mit den Werten mindestens einer vorgegebenen Spannungs/Zeit-Kennlinie verglichen wird, die eine von hohen Spannungswerten bei kürzeren Anlegezeiten zu niedrigeren Spannungswerten bei längeren Anlegezeiten abfallende Charakteristik besitzt, und das Alarmsignal und/oder der Abschaltvorgang ausgelöst wird, wenn die gemessenen Spannungswerte größer als die entsprechenden Werte auf mindestens einer der Spannungs/Zeit-Kennlinien sind, **dadurch gekennzeichnet, daß** bei mit der Belastung schwankender Spannung der Oberleitung die Spannung zwischen Chassis und einem belastungsunabhängigen virtuellen Potential gemessen wird, indem fortlaufend die Spannung zwischen den beiden Polen der Oberleitung gemessen wird, und zwischen die Spannungsmeßvorrichtung und den geerdeten Pol der Oberleitung eine Kompensationsspannung eingeschaltet wird, die der halben Differenz zwischen der konstanten Leerlaufspannung des Unterwerks und der gemessenen Oberleitungsspannung entspricht.

2. Verfahren nach Anspruch 1, **dadurch gekennzeichnet, daß** der gemessene Spannungswert und seine Anlegezeit gleichzeitig mit den Werten zweier vorgegebener Spannungs/Zeit-Kennlinien verglichen wird, deren Spannungswerte zu gleichen Anlegezeitpunkten unterschiedlich hoch sind, und ein erstes Alarmsignal ausgelöst wird, wenn die gemessenen Spannungswerte größer als die entsprechenden Werte auf der Spannungs/Zeit-Kennlinie mit niedrigeren Spannungswerten sind, und ein zweites Alarmsignal und/oder ein Abschaltsignal ausgelöst wird, wenn die gemessenen Spannungswerte größer als die entsprechenden Werte auf der Spannungs/Zeit-Kennlinie mit den höheren Spannungswerten sind.

3. Einrichtung zur Durchführung des Verfahrens nach Anspruch 1 mit einer Spannungsmeßvorrichtung (EBW), die einerseits mit dem Chassis verbunden und andererseits über eine Ankoppelschaltung (AS) an den geerdeten Leiter der Oberleitung anschließbar ist, wobei die Ankoppelschaltung (AS) zwei parallel geschaltete Zweige aufweist, die jeweils einen unmittelbar mit einem der Pole der Oberleitung verbindbaren Hochleistungs-Abschaltautomat (F+,F-) aufweisen, dem eine in Richtung auf den jeweiligen Pol durchlässige Diode (V+, V-) und ein Vorwiderstand (Rv+,Rv-) vorgeschaltet sind, und die Spannungsmeßvorrichtung (EBW) mit einer Vorrichtung (UND1-L1, UND2, AV) zur Erzeugung eines Alarmsignals und/oder zur Auslösung eines Abschaltvorganges verbunden ist, **dadurch gekennzeichnet, daß** die Spannungsmeßvorrichtung (EBW) einen zwischen das Chassis und die Ankoppelschaltung (AS) geschalteten Spannungsteiler (R1-R2) aufweist, der mit mindestens einer Komparatoreinheit (K1, K2) verbunden ist, der einerseits die am Spannungsteiler abgenommene Spannung (UF) zugeführt wird und der andererseits eine vorgegebene Spannungs/Zeit-Kennlinie (KL1, KL2) einprogrammiert ist, und die Komparatoreinheit (K1, K2) mit einer Vorrichtung (UND1-L1, UND2-L2) zur Erzeugung eines Alarmsignals und/oder einer Vorrichtung (AV) zur Auslösung eines Abschaltvorganges verbunden ist, und zwischen die Spannungsmeßvorrichtung (EBW) und die Ankoppelschaltung (AS) eine Vorrichtung (Q) zur Erzeugung einer Kompensationsspannung eingeschaltet ist sowie eine diese Vorrichtung ansteuernde, zwischen die Pole der Oberleitung geschaltete Meßvorrichtung (M) zur Messung der Netzspannung.

4. Einrichtung nach Anspruch 3 zur Durchführung des Verfahrens nach Anspruch 2, **gekennzeichnet durch** zwei parallel zueinander mit dem Spannungsteiler (R1-R2) verbundenen Komparatoreinheiten (K1, K2), denen unterschiedliche Spannungs/Zeit-Kennlinien (KL1, KL2) einprogrammiert sind, wobei jede Komparatoreinheit (K1, K2) mit einer eigenen Vorrichtung ((UND1-L1, UND2-L2) zur Erzeugung eines Alarmsignals und/oder einer Vorrichtung (AV) zur Auslösung eines Abschaltvorganges verbunden ist.

5. Einrichtung nach Anspruch 4, **dadurch gekennzeichnet, daß** der Ausgang jeder Komparatoreinheit (K1, K2) an den ersten Eingang eines ersten und zweiten UND-Gliedes (UND1, UND2) angeschlossen ist, dessen zweiter negierter Eingang mit einer Rücksetzvorrichtung (RS) verbunden ist, und die Ausgänge der beiden Komparatoreinheiten (K1, K2) an zwei negierte Eingänge eines dritten UND-Gliedes (UND3) angeschlossen sind, dessen dritter negierter Eingang mit der Rücksetzvorrichtung (RS) verbunden ist, wobei die Ausgänge des ersten und zweiten UND-Gliedes (UND1, UND2) jeweils mit einer Vorrichtung (L1, L2) zur Erzeugung eines Alarmsignals verbunden sind und der Ausgang des dritten UND-Gliedes (UND3) mit einer Vorrichtung (L3) zur Erzeugung eines Freigabesignals verbunden ist.

6. Einrichtung nach Anspruch 5, **dadurch gekennzeichnet, daß** der Ausgang der Komparatoreinheit (K2), deren Spannungs/Zeit-Kennlinie (KL2) die höheren Spannungswerte aufweist, an einen weiteren negierten Eingang des UND-Gliedes (UND1) angeschlossen ist, welches der anderen Komparatoreinheit (K1) zugeordnet ist.

7. Einrichtung nach Anspruch 6, **dadurch gekennzeichnet, daß** der Ausgang der Komparatoreinheit (K2), deren Spannungs/Zeit-Kennlinie die höheren Spannungswerte aufweist, über eine Speichereinheit (FF) mit dem ersten Eingang des ihr zugeordneten UND-Gliedes (UND2) verbunden ist.

8. Einrichtung nach Anspruch 7, **dadurch gekennzeichnet, daß** als Speichereinheit ein bistabiles Kippglied (FF) dient, dessen erster Eingang an die Komparatoreinheit (K2) und dessen zweiter Eingang an die Rücksetzvorrichtung (RS) angeschlossen ist, während der den Grundzustand kennzeichnende Ausgang des Kippgliedes (FF) mit einer Vorrichtung (AV) zur Auslösung eines Abschaltvorganges verbunden ist.

9. Testverfahren für eine Einrichtung nach Anspr.3, **dadurch gekennzeichnet, daß** bei von der Oberleitung abgezogenem Stromabnehmer die Eingänge der Ankoppelschaltung (AS) jeweils über einen, einen Prüfwiderstand (R3, R4) enthaltenden Prüfzweig (P1, P2) mit dem Chassis des Trolleybusses verbunden werden und die Vorrichtung (Q) zur Erzeugung einer Kompensationsspannung auf Abgabe der Maximalspannung geschaltet wird, wobei die Prüfwiderstände (R3, R4) derart bemessen sind, daß beim Einschalten eines Prüfzweiges (P1, P2) das der Spannungs/Zeit-Kennlinie (KL1) mit den niedrigeren Spannungswerten entsprechende Alarmsignal und beim gleichzeitigen Einschalten beider Prüfzweige (P1, P2) das der Spannungs/Zeit-Kennlinie (KL2) mit den höheren Spannungswerten entsprechende Alarmsignal abgegeben wird.

## Claims

1. Process for detection and monitoring of contact voltage on the chassis of trolley buses which can be connected to an earthed overhead line network, in which the chassis is connected via a voltage measurement device with the earthed pole of the overhead line and the voltage is measured between the chassis and the earth potential, and if the measured voltage exceeds a prespecified value an alarm signal and/or a disconnection process is triggered, wherein the measured voltage and its application time are compared with the values of at least one prespecified voltage/time curve with a characteristic diminishing from high voltages with short application times to lower voltages with longer application times, and the alarm signal and/or disconnection process is triggered when the voltages measured are greater than the corresponding values on at least one of the voltage/time curves, **characterised in that** when the voltage on the overhead line fluctuates with load, the voltage between the chassis and a load-independent virtual potential is measured by continuously measuring the voltage between the two poles of the overhead line, and applied between the voltage measurement device and the earthed pole of the overhead line is a compensation voltage which corresponds to half the difference between the constant no-load voltage of the substation and the measured overhead line voltage.

2. Process according to claim 1, **characterised in that** the voltage measured and its application time are compared simultaneously with the values of two prespecified voltage/time curves, the voltage values of which differ for the same application times, and a first alarm signal is triggered when the voltages measured are greater than the corresponding values on the voltage/time curve with lower voltage values and a second alarm signal and/or a disconnection signal is triggered when the voltages measured are greater than the corresponding values on the voltage/time curve with higher voltage values.

3. Device for implementing of the process according to claim 1 with a voltage measurement device (EBW) which is connected on one side with the chassis and on the other can be connected via a coupling circuit (AS) to the earthed conductor of the overhead line, wherein the coupling circuit (AS) has two parallel switched branches each with a high power automatic disconnection unit (F+, F-) which can be connected directly with one of the poles of the overhead line and before which is connected a diode (V+, V-) conducting in the direction of the pole concerned and a series resistor (Rv+, Rv-), and the voltage measurement device (EBW) is connected with a device (UND1-L1, UND2, AV) to generate an alarm signal and/or trigger a disconnection process, **characterised in that** the voltage measurement device (EBW) has a voltage splitter (R1-R2) that is connected between the chassis and the coupling circuit (AS) and is connected with at least one comparator unit (K1, K2) to which firstly is supplied the voltage (UF) taken at the voltage splitter and which secondly is programmed with a prespecified voltage/time curve (KL1, KL2), and the comparator unit (K1, K2) is connected with a device (UND1-L1, UND2-L2) to generate an alarm signal and/or a device (AV) to trigger a disconnection process, and between the voltage measurement device (EBW) and the coupling circuit (AS) are connected a device (Q) to generate a compensation voltage and a measurement unit (M) controlling this device and inserted between the poles of the overhead line to measure the network voltage.

4. Device according to claim 3 for implementing of a process according to claim 2, **characterised by** two comparator units (K1, K2) connected in parallel to each other with the voltage splitter (R1-R2) and programmed with different voltage/time curves (KL1, KL2), wherein each comparator unit (K1, K2) is connected with its own device (UND1-L1, UND2-L2) to generate an alarm signal and/or a device (AV) to trigger a disconnection process.

5. Device according to claim 4, **characterised in that** the output of each comparator unit (K1, K2) is connected to a first input of the first and second AND gate (UND1, UND2), the second negated input of which is connected with a reset device (RS), and the outputs of the two comparator units (K1, K2) are connected to two negated inputs of a third AND gate (UND3), the third negated input of which is connected to the reset device (RS), wherein the outputs of the first and second AND gates (UND1, UND2) are each connected with a device (L1, L2) to generate an alarm signal and the output of the third AND gate (UND3) is connected with a device (L3) to generate a release signal.

6. Device according to claim 5 **characterised in that** the output from the comparator unit (K2), the voltage/time curve (KL2) of which has the higher voltage values, is connected to a further negated input of the AND gate (UND1) which is allocated to the other comparator unit (K1).

7. Device according to claim 6, **characterised in that** the output of the comparator unit (K2), the voltage/time curve of which has the higher voltage values, is connected via a memory unit (FF) to the first input of its allocated AND gate (UND2).

8. Device according to claim 7, **characterised in that** a bistable trigger circuit (FF) serves as a memory unit, the first input of which is connected to the comparator unit (K2) and the second input of which is connected to the reset device (RS), while the output of the trigger circuit (FF) characterising the base state is connected to a device (AV) to trigger a disconnection process.

9. Test process for a device according to claim 3, **characterised in that** when the current collector is retracted from the overhead line, the inputs of the coupling circuit (AS) are each connected via a test branch (P1, P2) containing a test resistor (R3, R4) with the chassis of the trolley bus, and the device (Q) to generate a compensation voltage is switched to emit the maximum voltage, the test resistors (R3, R4) being dimensioned such that on connection of a test branch (P1, P2) the alarm signal corresponding to the voltage/time curve (KL1) with the lower voltage values is emitted, and on simultaneous connection of both test branches (P1, P2) the alarm signal corresponding to the voltage/time curve (KL2) with the higher voltage values is emitted.

## Revendications

1. Procédé pour détecter et surveiller la tension de contact sur le châssis de trolleybus qui peuvent être connectés à un réseau de lignes aériennes mis à la terre, dans lequel le châssis est relié au pôle mis à la terre de la ligne aérienne à travers un dispositif de mesure de la tension et la tension entre le châssis et le potentiel de terre est mesurée et, lorsque la valeur de tension mesurée devient supérieure à une valeur prédéterminée, un signal d'alarme et/ou un processus de déconnexion sont déclenchés, la valeur de tension mesurée et son temps d'application étant alors comparés aux valeurs d'au moins une courbe caractéristique tension/temps prédéterminée, laquelle possède une caractéristique qui décroît depuis de hautes valeurs de tension associées à des temps d'application courts jusqu'à des valeurs de tension plus basses associées à des temps d'application plus longs, et le signal d'alarme et/ou le processus de déconnexion sont déclenchés lorsque les valeurs de tension mesurées sont plus grandes que les valeurs correspondantes situées sur au moins une des courbes caractéristiques tension/temps, **caractérisé en ce que**, lorsque la tension de la ligne aérienne fluctue avec la charge, la tension entre le châssis et un potentiel virtuel fonction de la charge est mesurée, la tension entre les deux pôles de la ligne aérienne étant mesurée en permanence et une tension de compensation étant appliquée entre le dispositif de mesure de la tension et le pôle mis à la terre de la ligne aérienne, laquelle tension de compensation correspond à la moitié de la différence entre la tension constante à vide de la sous-station et la tension mesurée de la ligne aérienne.

2. Procédé selon la revendication 1, **caractérisé en ce que** la valeur de tension mesurée et son temps d'application sont comparés simultanément aux valeurs de deux courbes caractéristiques tension/temps dont les valeurs de tension sont de niveaux différents aux mêmes instants d'application, et un premier signal d'alarme est déclenché lorsque les valeurs de tension mesurées sont plus grandes que les valeurs correspondantes sur la courbe caractéristique tension/temps qui possède de plus faibles valeurs de tension, et un deuxième signal d'alarme et/ou un signal de déconnexion est déclenché lorsque les valeurs de tension mesurées sont plus grandes que les valeurs correspondantes sur la courbe caractéristique tension/temps qui possède les valeurs de tension les plus élevées.

3. Dispositif pour la mise en oeuvre du procédé selon la revendication 1, comprenant un dispositif de mesure de la tension (EBW) qui, d'une part, est connecté au châssis et, d'autre part, peut être raccordé au conducteur mis à la terre de la ligne aérienne par l'intermédiaire d'un circuit de couplage (AS), le circuit de couplage (AS) présentant deux branches connectées en parallèle qui présentent chacune un automate (F+, F-) de déconnexion de grande puissance qui peut être connecté directement à un des pôles de la conduite aérienne, en série avec lequel sont connectées une diode (V+, V-) qui est conductrice dans le sens allant vers le pôle considéré et une résistance série (Rv+, Rv-) et le dispositif de mesure de la tension (EBW) est relié à un dispositif (ET1-L1, ET2, AV) pour la production d'un signal d'alarme et/ou pour le déclenchement d'un processus de déconnexion, **caractérisé en ce que** le dispositif de mesure de la tension (EBW) présente un diviseur de tension (R1-R2) connecté entre le châssis et le circuit de couplage (AS) et qui est relié à au moins une unité de comparateur (K1, K2) à laquelle, d'une part, la tension (UF) prise sur le diviseur de tension est envoyée et dans laquelle, d'autre part, est programmée une courbe caractéristique tension/temps prédéterminée (KL1, KL2) et l'unité de comparateur (K1, K2) est reliée à un dispositif (ET1-L1, ET2-L2) pour la production d'un signal d'alarme et/ou à un dispositif (AV) pour le déclenchement d'un processus de déconnexion, et un dispositif (Q) pour la production d'une tension de compensation est intercalé entre le dispositif de mesure de la tension (EBW) et le circuit de couplage (AS), ainsi qu'un dispositif de mesure (M) pour la mesure de la tension du réseau, qui commande ce dispositif et qui est intercalé entre les pôles de la ligne aérienne.

4. Dispositif selon la revendication 3 pour la mise en oeuvre du procédé selon la revendication 2, **caractérisé par** deux unités de comparateurs (K1, K2) connectées au diviseur de tension (R1, R2) en parallèle entre elles, dans lesquelles sont programmées des courbes caractéristiques tension/temps différentes (KL1, KL2), chaque unité de comparateur (K1, K2) étant connectée à son propre dispositif (ET1-L1, ET2-L2) pour la production d'un signal d'alarme et/ou à un dispositif (AV) pour le déclenchement d'un processus de déconnexion.

5. Dispositif selon la revendication 4, **caractérisé en ce que** la sortie de chaque unité de comparateur (K1, K2) est connectée à la première entrée d'un premier et d'un deuxième élément ET (ET1, ET2) dont la deuxième entrée inversée est reliée à un dispositif de remise à zéro, et les sorties des deux unités de comparateurs (K1, K2) sont connectées à deux entrées inversées d'un troisième élément ET (ET3) dont la troisième entrée inversée est reliée au dispositif de remise à zéro (RS), les sorties des premier et deuxième éléments ET (ET1, ET2) étant reliées chacune à un dispositif (L1, L2) pour la production d'un signal d'alarme et la sortie d'u troisième élément ET (ET3) étant reliée à un dispositif (L3) pour la production d'un signal de déblocage.

6. Dispositif selon la revendication 5, **caractérisé en ce que** la sortie de l'unité de comparateur (K2) dont la courbe caractéristique tension/temps (KL2) présente les valeurs de tension les plus élevées est connectée à une autre entrée inversée de l'élément ET (ET1) qui est associée à l'autre unité de comparateur (K1).

7. Dispositif selon la revendication 6, **caractérisé en ce que** la sortie de l'unité de comparateur (K2) dont la courbe caractéristique tension/temps présente les plus hautes valeurs de tension est connectée, par l'intermédiaire d'une unité de mémoire (FF), à la première entrée de l'élément ET (ET2) qui lui est associé.

8. Dispositif selon la revendication 7, **caractérisé en ce qu'**on utilise, comme unité de mémoire une bascule bistable (FF) dont la première entrée est connectée à l'unité de comparateur (K2) et dont la deuxième entrée est connectée au dispositif de remise à zéro (RS), tandis que la sortie de la bascule (FF) qui caractérise l'état de base est reliée à un dispositif (AV) pour le déclenchement d'un processus de déconnexion.

9. Procédé de test pour un dispositif selon la revendication 3, **caractérisé en ce que**, lorsque le balai conducteur est éloigné de la ligne aérienne, les entrées du circuit de couplage (AS) sont reliées au châssis du trolleybus, chacune par l'intermédiaire d'une branche de contrôle (P1, P2) qui comprend une résistance de contrôle (R3, R4), et le dispositif (Q) pour produire une tension de compensation est connecté sur la prise de la tension maximale, les résistances de contrôle (R3, R4) étant calculées de manière que le signal d'alarme qui correspond à la courbe caractéristique tension/temps (KL1) présentant les valeurs de tension les plus basses soit émis lors de la mise en circuit d'une branche de contrôle (P1, P2), et que le signal d'alarme qui correspond à la courbe caractéristique tension/temps (KL2) présentant les valeurs de tension les plus élevées soit émis lors de la mise en circuit simultanée des deux branches de contrôle (P1, P2),
